# EUROPEAN PATENT SPECIFICATION

(11) **EP 3 717 833 B1**
(45) Date of publication and mention of the grant of the patent: **21.09.2022**
(21) Application number: 18822516.3
(22) Date of filing: 21.11.2018
(51) Int. Cl.: F23L 7/00, F23J 7/00, B01D 53/56

(54) **A METHOD OF REDUCTION OF NITROGEN OXIDES AND CARBON MONOXIDE IN FURNACE CHAMBERS OF WATER BOILERS AND STEAM BOILERS, ESPECIALLY GRATE BOILERS, AND A SYSTEM FOR REDUCTION OF NITROGEN OXIDES AND CARBON MONOXIDE IN FURNACE CHAMBERS OF WATER BOILERS AND STEAM BOILERS, ESPECIALLY GRATE BOILERS.**
VERFAHREN ZUR REDUKTION VON STICKOXIDEN UND KOHLENMONOXID IN BRENNKAMMERN VON WASSER- UND DAMPFKESSELN, INSBESONDERE VON ROSTKESSELN, UND SYSTEM ZUR REDUKTION VON STICKOXIDEN UND KOHLENMONOXID IN BRENNKAMMERN VON WASSER- UND DAMPFKESSELN, INSBESONDERE VON ROSTKESSELN
PROCÉDÉ DE RÉDUCTION D'OXYDES D'AZOTE ET DE MONOXYDE DE CARBONE DANS DES CHAMBRES DE FOUR DE CHAUDIÈRES À EAU ET DE CHAUDIÈRES À VAPEUR, EN PARTICULIER DE CHAUDIÈRES À GRILLE, ET SYSTÈME DE RÉDUCTION D'OXYDES D'AZOTE ET DE MONOXYDE DE CARBONE DANS DES CHAMBRES DE FOUR DE CHAUDIÈRES À EAU ET DE CHAUDIÈRES À VAPEUR, EN PARTICULIER DE CHAUDIÈRES À GRILLE

(30) Priority: 24.11.2017 PL 42357617
(43) Date of publication of application: 07.10.2020
(73) Proprietor: ICS Industrial Combustion Systems S.A., 60-349 Poznan (PL)
(72) Inventor: SZEWCZYK, Dariusz, 62-030 Lubon (PL); PASIEWICZ, Andrzej, 62-035 Kórnik (PL)
(74) Representative: Piatkowska, Elzbieta
(86) International application number: PCT/PL2018/000114
(87) International publication number: WO 2019/103633

(56) References cited:
- WO-A1-92/02290
- WO-A1-92/02290
- WO-A1-2013/055285
- US-A- 4 115 515
- US-A- 4 538 529
- US-A- 5 009 173
- US-A1- 2016 003 473

## Description

The subject of the invention is a method of reduction of nitrogen oxides and carbon monoxide in furnace chambers of water boilers and steam boilers, especially grate boilers, and a water and steam boiler with a system for reduction of nitrogen oxides and carbon monoxide in the furnace chamber, which system is also applicable to the reduction of generation of nitrogen oxides and carbon monoxide and/or their reduction in combustion chambers of heating boilers and power boilers, especially grate boilers.

The methods described in the patents No. PL 196745 B1 and WO 95/15463 require large capital expenditures due to the necessity of installing complex cooling systems, moreover, the introduction of a pipe into the combustion chamber requires its periodic or emergency pulling out, which results in the need to install expensive drive systems, and also requires a relatively large space around the combustion chamber, which is not always possible and practically makes the implementation of these solutions impossible in some cases.

The methods described in the patent No. US 20160003473 A1 present solutions consisting in introducing into the combustion chamber one or more lances supplying air with a reactant through one or two side walls of the boiler. These solutions assume a "rigid" installation of the lances directly in the boiler plating and eliminate the need to install the drive systems for pulling out the lances as well as the need to provide a considerable space around the combustion chamber, periodic inspection and cleaning of the lances require however the stoppage of combustion process inside the boiler. This method of assembly also causes the length and diameter of the lances to be limited due to the stresses that they are subjected to inside the boiler, and the total mass of devices.

The methods described in the patents No. US 2006/0118013 A1 and WO 2013/09566 A2 focus on the methods of introducing a reactant with secondary air through nozzles located in one or more boiler walls. Such a method of injecting the reactant together with secondary air greatly reduces the investment and operating costs of the solution, however, it also limits the selection of an appropriate injection angle of the reactant with the secondary air and can cause that these substances are not directly introduced right into the centre of combustion process, but they only affect its part located closer to the boiler walls.

The method described in the patent No. WO 2004/085922 A2 assumes the reduction of NOx emissions by using the method of primary reduction of toxic compounds that consists in dividing the combustion air stream. In this solution, a part of the air is supplied near the fuel supply as primary air, and the remaining part of air necessary for a complete and perfect combustion of the fuel is fed above the fuel supply point, in higher parts of the combustion area, by means of nozzles located on the walls of the combustion chamber, the air stream fed in this area forms a vortex that is parallel to or close to the plane perpendicular to the vertical axis of the combustion chamber.

WO 92/02290 A1 discloses a method and apparatus for reducing nitrogen oxides in the flue gas from a boiler furnace. The nitrogen oxides are reduced by injecting an ammonia-containing treatment gas comprising a carrier gas into the flue gas.

Elimination of the above inconveniences and limitations, with the guarantee of: further reduction of NOₓ emissions, reduction of CO emission, reduction to a minimum or complete elimination of the reactant in flue gas and ash, increase in system efficiency by limiting the proportion of oxygen in the flue gas, and reduction of investment outlays and operating costs in comparison with known methods of NOₓ reduction and CO emission reduction, can be achieved by a method according to the present invention.

In the method embodiment variations, in addition to the process gas, a reactant, preferably NH₃ or CO(NH₂)₂, may be injected into the furnace chamber in a manner analogous to the process gas, by means of process gas lances or additional lances.

According to one aspect of the invention, there is provided a a method of reducing nitrogen oxides and carbon monoxide in furnace chambers of water boilers and steam boilers, especially grate boilers, as set out in claim 1.

According to a further aspect of the invention, a water and steam boiler, especially a grate boiler, comprising a furnace chamber and a system for the reduction of nitrogen oxides and carbon monoxide is provided as set out in claim 7.

In an embodiment variation, the process gas lances are located on the front wall of the furnace chamber in a specially made panel wall deflection at one, two or three levels, and the process gas is injected in a direction opposite to the main, natural flow direction of products / semi-products of the combustion process, maintaining a deviation of +/-15° in the plane parallel to the longitudinal symmetry plane of the furnace chamber, the injection points from the highest level of lances being at a distance of 0.5 to 1 height of the furnace chamber above the grate, preferably at the level of the lower edge of the bull nose, and the remaining rows below them.

In a further embodiment variation, the process gas lances are placed on the front or/and on the side wall of the furnace chamber at one, two or three levels, and the process gas is introduced into the furnace chamber by means of lances similar in their shape to the letter "L", in the direction opposite to the main, natural flow direction of the products / semi-products of the combustion process, maintaining a stream deviation of +/-15°, in a plane parallel to the longitudinal symmetry plane of the furnace chamber, the injection points from the highest level of lances being at a distance of 0.5 to 1 height of the furnace chamber above the grate, preferably at the level of the lower edge of the bull nose, and the remaining rows below.

In another embodiment variation, instead of the process gas, a mixture of process gas and reactant is injected into the furnace chamber through the same lances and at the same speed as the process gas, i.e. from 30 to 180 m/s, preferably 135 m/s, the reactant being injected through a reactant feed consisting of a reservoir, a pump, a flow regulator, a flow meter and at least one lance, into the process gas collector in a central manner through at least one lance, in order to form a homogeneous mixture therein, whereas in the convection part of the boiler or behind it, a device measuring NOx concentration in the flue gas is built in, from which the signal is sent to the control device, which in turn controls the reactant flow rate through the actuating and measuring devices built on this installation.

In a further embodiment variation, in addition to the process gas, the reactant in form of a liquid, gas or gas-liquid mixture is injected into the furnace chamber through nozzles located coaxially in the process gas lances, the number of reactant nozzles being equal to or smaller than the number of process gas lances.

In a further embodiment variation, in addition to the process gas, the reactant in form of a liquid, gas or gas-liquid mixture is injected into the furnace chamber through nozzles located eccentrically in the process gas lances, the number of reactant nozzles being equal to or smaller than the number of process gas lances.

In another embodiment variation, in addition to the process gas, the reactant in form of a liquid, gas or gas-liquid mixture is injected into furnace chamber through the lances located between the process gas lances, the number of reactant lances being equal to or smaller than the number of process gas lances.

In a further embodiment variation, the process gas lances are located on the back wall of the furnace chamber at the level of the lower edge of the furnace chamber bull nose, i.e. at the connection point of the furnace chamber with the boiler convection draught, in a number of from a few up to a dozen or so, depending on the size of the furnace chamber, the process gas being supplied through these lances in the horizontal direction, with maintaining a stream deviation of +/-45°, in an amount of up to 20%, preferably 10% of the air stream supplied to the device, necessary to completely and perfectly burn the fuel, in the understanding of accepted standards for this type of devices, with maintaining or reducing the proportion of oxygen in the flue gas.

There are also embodiment variations where the process gas is injected into the furnace chamber of the device through the lances installed on the back wall of the furnace chamber, as described in one of the above variants, while the reactant in form of a liquid, gas or gas-iiquid mixture and a part of the air in an amount of up to 5% of the air stream supplied to the furnace chamber, are injected into the furnace chamber through lances installed at one, two or three levels from the opposite wall of the furnace chamber in a direction opposite to the direction of the main, natural flow of combustion process products/semi-products flowing through the furnace chamber of the device, maintaining the stream deviation of +/-15°. In a further variant, the process gas is introduced into the combustion chamber through the lances located at a level different from the reactant feed level.

In a further embodiment variation, the amount of media flowing through the lances may vary for individual lances depending on the boiler load, in order to balance the temperature profiles in the furnace chamber and to shape the reduction and oxidation zone.

In a further embodiment variation, for different loadings of the device, a part of the lances may be switched off in order to balance the temperature profiles in the furnace chamber and to shape the reduction and oxidation zone.

In the method according to the present invention, the dynamic effect of the process gas stream is used to intensify the mixing process in the furnace chamber by causing a strong internal flue gas recirculation and strong swirl therein, the direction of which is opposite to the main, natural flue gas flow direction, and the spinning plane is parallel to the longitudinal plane of symmetry of the furnace chamber. This solution results in the balance of the temperature profile in the furnace chamber, which causes the thermal load of the furnace chamber to be balanced, which in turn directly translates into an increase in the efficiency and durability of the device, the solution according to the method makes possible a precise temperature control in the furnace chamber in the area where the phenomenon of reduction of nitrogen oxides and CO afterburning occurs, reduces the concentration of the reactant in the furnace chamber, minimizing the risk of corrosion of the device parts, moreover, the invention according to one of variants, by deploying the lances at several levels of the furnace chamber, increases the possibilities of the system, in particular in a wide scope of boiler load variability and it is usually applied in units of higher power. The invention according to the method also limits the reactant consumption in comparison to the methods known up to now, and thus makes possible to minimize the content of unreacted reactant in ash or flue gas, which plays a very important role in terms of system operating costs, environmental protection and ash management. The opposite direction of the reactant injection in relation to the main, natural flue gas flow direction, away from the point of connection of the furnace chamber with the convection draught of the device, at which there are no conditions of appropriate temperature window for the occurrence of reduction reaction, has a very important advantage over traditional directions and points of the reactant injection cited in the prior art search, because in the described method according to the invention, the phenomenon consisting in "entrainment" of unreacted reactant particles by the flue gas into the convection part of the boiler immediately after their injection into the furnace chamber, and further into flue gas cleaning and discharging systems does not occur or is minimized, another advantage of the method according to the invention, resulting from the direction of the reactant feed opposite to the flue gas flow direction away from the point of the flue gas exit from the combustion chamber is that in relation to the methods known up to now, the time interval from the reactant injection into the furnace chamber in a region of relatively low temperature until the reduction reaction occurrence is considerably extended, at which time interval the reactant is mixed with the injected process gas and combustion products, moving in the direction of temperature increase, i.e. towards the combustion area, where in the temperature range from 850°C up to 1050°C and in the presence of nitrogen compounds the reduction reaction occurs, the still not reacted reactant particles reach the temperature area of above 1050°C, where they are bound with oxygen and form NOₓ type compounds, which then along with the combustion products are directed upwards the furnace chamber in accordance with the main, natural draught prevailing in the furnace chamber, where they encounter still not reacted reactant and the temperature conditions required for the reduction reaction occurrence, a part of still not reacted reactant and not reduced nitrogen compounds (NOₓ) are recycled to an area convenient from the point of view of the reduction reaction occurrence by a strong stream of recirculated flue gas produced by the process gas stream. Such a process conducting influences in a natural and spontaneous way the effectiveness of the reduction process and in a wide range protects the system against the penetration of unreacted reactant into the installations that discharge ash and dust or into the flue gas purification and discharge systems.

Such a method of feeding the process gas or process gas and reactant results in creation of a strong reverse internal recirculation vortex, which sucks in the flue gas from the main flue gas stream, from the area just before the connection of the furnace chamber with the convection draught, and thus creates optimal conditions for conducting the process of reduction of nitrogen oxides and post-combustion of carbon monoxide, with a minimum proportion of oxygen in the final flue gas, and minimizes the loss of the reactant into the chimney due to the fact that the reactant injection point is located away from the flue gas exit point from the furnace chamber, which protects the system from the "entrainment" of unreacted, only just injected reactant particles into the convection draught of the boiler, moreover, the opposite direction of injection of the reagent, towards the temperature increase in the furnace chamber, and strong internal recirculation give the time necessary for mixing the reactant with the process gas and the flue gas, which results in creation of a homogeneous mixture, and thus contributes to shortening the time required for the NOₓ reduction reaction, which occurs when that mixture enters the temperature area from 850°C to 1050°C, the excess of unreacted reactant then enters an area with a temperature of above 1050°C, where it combines with oxygen to form NOₓ compounds, which are transported together with the main stream of flue gas to the combustion chamber area with lower temperature, where they encounter the reactant again and are reduced, a part of the flue gas just before the connection of the furnace chamber with the boiler convection draught is recycled again due to the action of a strong recirculation vortex and riches the subsequent zones, such a self-bonding of the process according to the method ensures low NOₓ emission from the system at low reactant consumption and low CO emission, with low oxygen content in the final flue gas.

The invention in exemplary, but not limiting embodiments is shown in the figures, in which the following is presented:

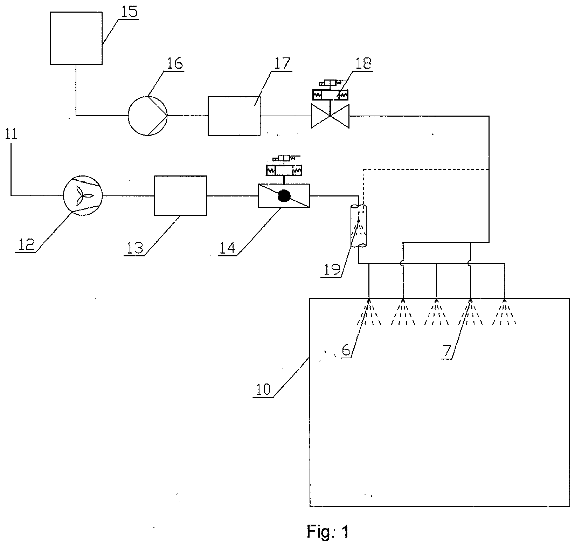

- fig. 1: - block diagram of a system for the injection of process gas and reactant into a furnace chamber

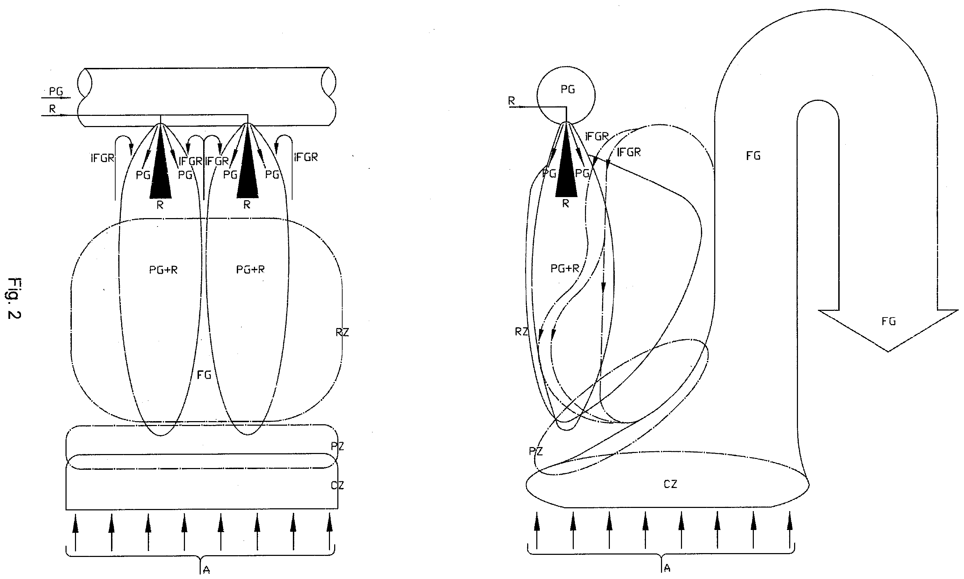

- fig. 2: - method idea according to the invention together with an illustration of the process course and an illustrative representation of distribution of zones in the furnace chamber for the injection points located on the front wall of the furnace chamber or on the furnace chamber ceiling, the reactant nozzles being located in the interior of process gas lances,

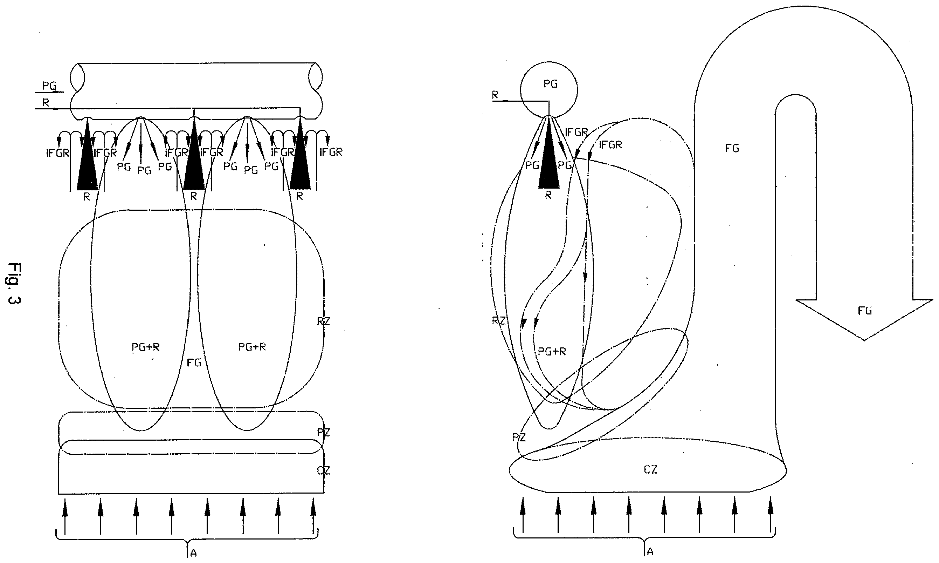

- fig. 3: - method idea according to the invention together with an illustration of the process course and an illustrative representation of the distribution of zones in the furnace chamber for injection points located on the front wall of the furnace chamber or on the furnace chamber ceiling, the reactant lances located between the process gas lances,

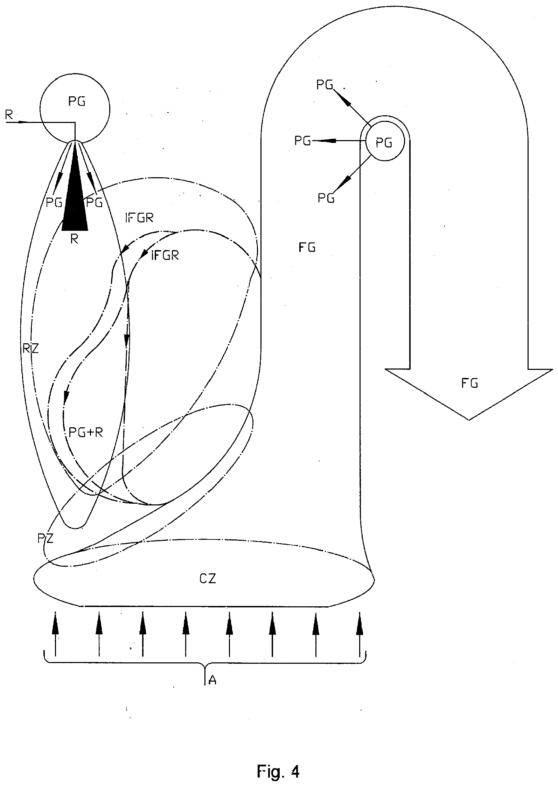

- fig. 4: - method idea according to the invention together with an illustration of the process course for the injection points of the process gas located on the back wall of the furnace chamber and for the injection points of the reactant and process gas located on the opposite wall of the furnace chamber,

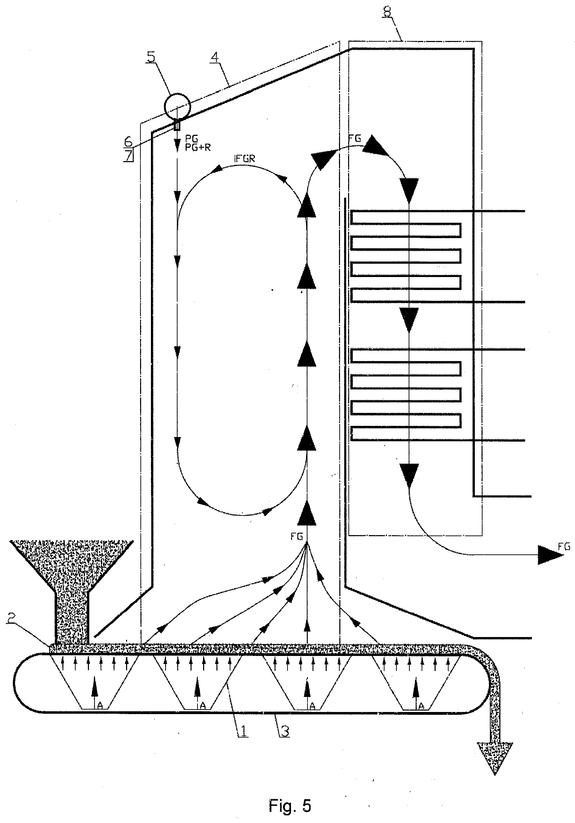

- fig. 5: - boiler diagram in cross-section in the vertical plane, showing the location of the injection lances on the upper wail of the furnace chamber with marked flow directions of flue gas, process gas and reactant, as well as marked resulting reverse vortex and internal flue gas recirculation,

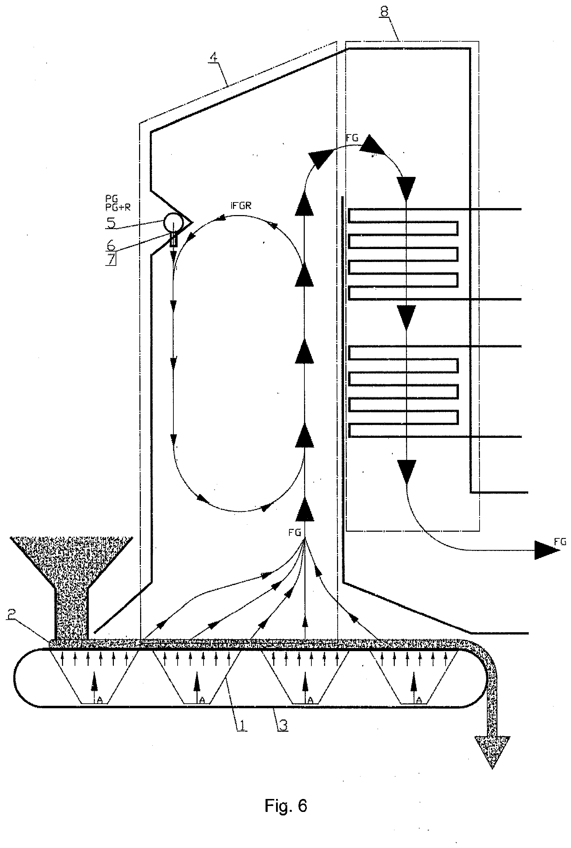

- fig. 6: - boiler diagram in cross-section in the vertical plane, showing the location of the injection lances on the front wall of the furnace chamber in a specially made wall deflection, with marked flue gas, process gas and reactant flow directions and marked resulting reverse vortex and internal flue gas recirculation,

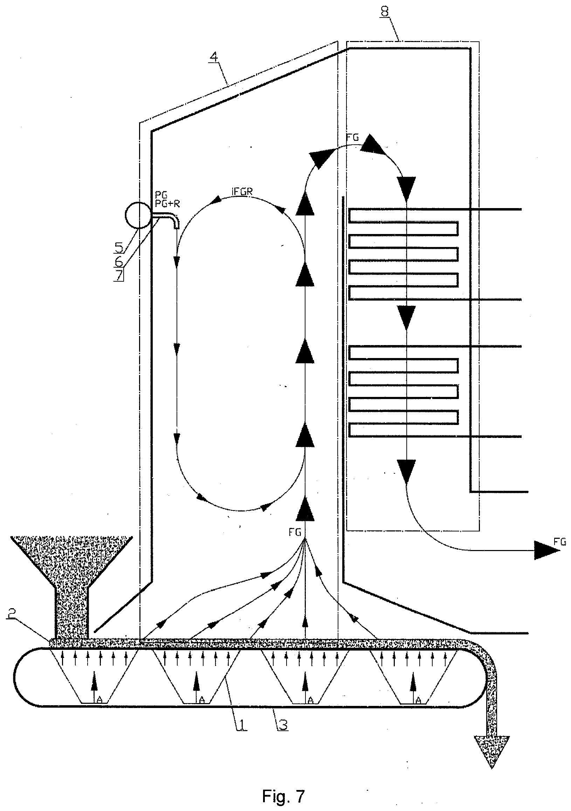

- fig. 7: - boiler diagram in cross-section in the vertical plane, showing the location of injection lances on the front wall of the furnace chamber, the injection lances made in the shape of the letter "L", with marked flow directions of flue gas, process gas and reactant, and marked resulting reverse vortex and internal flue gas recirculation,

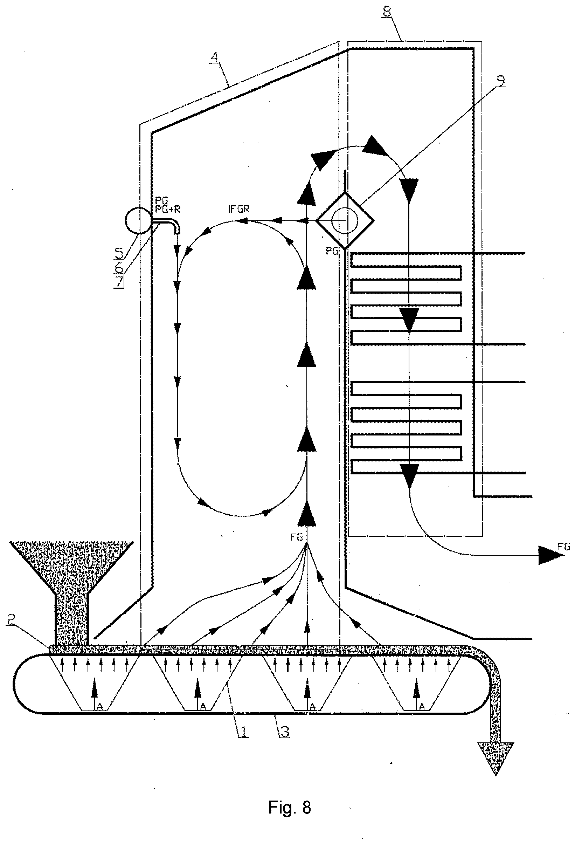

- fig. 8: - boiler diagram in cross-section in the vertical plane, showing the location of the process gas injection lances on the back wall of the furnace chamber, and of the injection lances of process gas and reactant on the front wall of the furnace chamber, with marked flow directions of process gas and reactant, and marked resulting reverse vortex and internal flue gas recirculation,

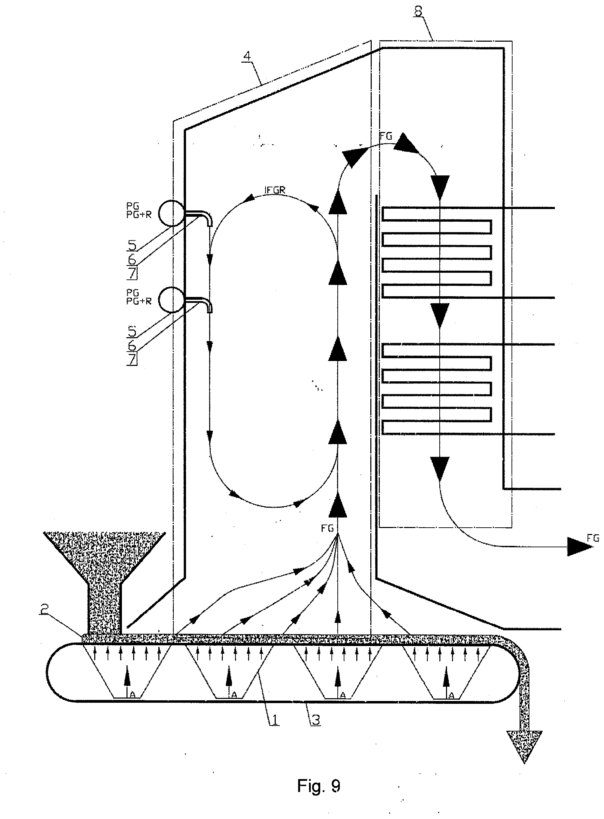

- fig. 9: - boiler diagram in cross-section in the vertical plane, showing the location of injection lances on the front wall of the furnace chamber, at two levels, the injection lances made in the shape of the letter "L", with marked flow directions of process gas and reactant and marked resulting reverse vortex and internal flue gas recirculation,

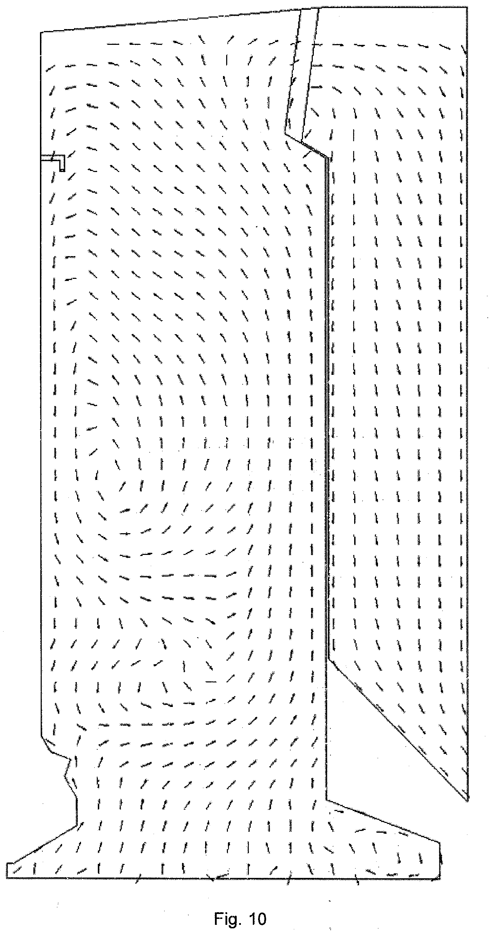

- fig. 10: - schematic diagram of the boiler in cross-section in the vertical plane, showing vectors of vortices generated in the furnace chamber according to CFD calculations,

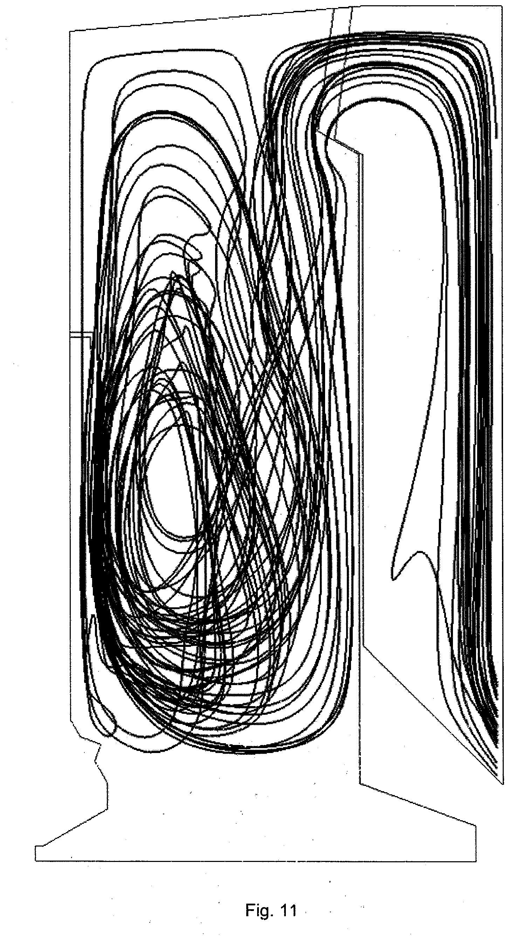

- fig. 11: - schematic diagram of the boiler in cross-section in the vertical plane, showing the lines of currents generated in the furnace chamber according to CFD calculations.

The block diagram of a system for the injection of process gas and reactant into a furnace chamber is shown in figure 1, where: 6 - means the process gas injection lance, 7 - means the reactant injection lance/nozzle, 10 - means the furnace chamber of the device, 11 - means the process gas intake, 12 - means the process gas fan, 13 - means the measuring system installed on the process gas collector, 14 - means the regulating and shut-off element installed on the process gas collector, 15 - means the reactant tank, 16 - means the reactant pump, 17- means the measuring system built on the reactant installation, 18 - means the regulating and shut-off element built on the reactant installation, 19 - means the central injection lance of the reactant into the process gas.

In figures 2, 3 and 4, the processes occurring during combustion in the furnace chamber of the device, preferably a grate boiler, and the main flow and rotation directions of the process gas, flue gas and reactant are schematically and visually shown, where: A - means the blast (primary) air stream, PG - means the process gas stream, R - means the reactant stream, FG - means the flue gas stream, iFGR - means the internal flue gas recirculation, PG + R - defines the area of occurrence of the process gas and reactant mixture, RZ - defines the area in which the reduction reaction takes place, PZ - defines the production area of nitrogen compounds, CZ - defines the main combustion area.

In figures 5, 6, 7, 8 and 9, a schematic and visual representation of the place of installation of process gas and reactant injection lances is shown, as well as the current lines and spin directions that arise during combustion in the furnace chamber of the device, preferably a grate boiler, where: 1 - means the under-grate air-box, 2 - means the fuel layer moving on the grate, 3 - means the grate, 4 - means the furnace chamber, 5 - means the process gas / reactant collector, 6 - means the injection lance of the process gas, 7 - means the reactant injection lance/nozzle, 8 - means the convection part of the boiler, 9 - means the process gas collector, A - means the blast (primary) air stream, PG - means the process gas stream, PG+R - means the process gas and reactant stream, FG - means flue gas stream, iFGR - means the internal flue gas recirculation.

An exemplary embodiment of a water and steam boiler according to the invention is shown in fig. 7, where A means the primary air forced by the blast fan to the regulating slide dampers and then into the under-grate boxes 1 whose task is to bring the oxidant in a controlled manner to the fuel 2 moving on the grate 3. On the grate 3 and directly above it, the fuel is combusted and the amount of oxidant supplied as the primary air A ranges from 0.7 to 1.1, preferably 0.9 of the stoichiometric amount of air needed for complete and perfect combustion of fuel 2 moving on the grate 3, in the meaning of standards for this type of device. The products and semi-products of FG combustion move towards the upper part of furnace chamber 4, whereas their significant part moves near the back wall of the furnace chamber 4, which is a phenomenon normally found in furnace chambers of this type of boilers. At a distance of up to 0.5 of the depth of the furnace chamber 4, at the level of the lower edge of the boiler bull nose, on the front wall of the furnace chamber 4 through the collector 5 mounted outside the furnace chamber, through a series of lances 6 and 7 made and mounted so that the direction of injection of the process gas PG or of the process gas with reactant PG+R be opposite to the main flow direction of the FG combustion products through the combustion chamber 4, with maintaining a stream deviation of +/-15° in a plane parallel to the longitudinal symmetry plane of the furnace chamber. The injection speed of the process gas PG or reactant R is from 30 up to 180 m/s, preferably 135 m/s, and the process gas stream is up to 20% of the air stream necessary for complete and perfect combustion of fuel in the meaning of the standards for this type of device, a high speed and a significant mass of the process gas stream causes a strong internal recirculation of the flue gas iFGR in the interior of the combustion chamber 4 and the creation of a strong reverse vortex in the plane parallel to the longitudinal symmetry plane of the furnace chamber. The lances 6 and 7 are formed in a shape similar to the letter "L" and are introduced through deflections made in the front wall of the furnace chamber 10. The method of attaching the lances 6 and 7 enables their position to be changed in a plane parallel to the longitudinal symmetry plane of the boiler by a value of +/-15°. This method of feeding the process gas PG and reagent R is favourable for the creation of conditions for conducting the process of reducing nitrogen oxides with very high efficiency due to the point of injection of the reactant being away from the place of flue gas exit from the furnace chamber 4, which protects the system from the entrainment of unreacted reactant particles into the boiler convection draught 8, the reactant is mixed with the injected process gas and combustion products, moving towards a temperature increase, i.e. towards the combustion area, where a reduction reaction takes place in the temperature range of from 850°C up to 1050°C and in the presence of nitrogen oxides, the excess of unreacted reactant R is transported into an area with increasingly high temperature, where the unreacted reactant reacts with oxygen and creates nitrogen oxides, which then along with the combustion products travel up to the upper part of combustion chamber, according to the main, natural draught prevailing in the furnace chamber, where they encounter the still not reacted reactant and temperature conditions required from the point of view of reduction reaction occurrence for the occurrence of reduction reactions, a part of still unreacted reactant and of unreduced nitrogen compounds (NOₓ) is just before leaving the furnace chamber recycled again to the area convenient from the point of view of reduction reaction occurrence by a strong stream of recirculated flue gas produced by the process gas stream. The process gas and reactant feed by the method according to the invention results in the creation of a strong reverse vortex parallel to the longitudinal symmetry plane of the combustion chamber, which makes the system in a wide spectrum of operation a self-regulating system, and thus self-protecting one against the penetration of unreacted reactant to flue gas and ashes, moreover, the system according to the invention is not very sensitive to fluctuations in the amount of nitrogen oxides generated in the fuel combustion process on the grate.

The invention is applicable wherever emphasis is placed on the high quality of the combustion process, low emissivity especially of nitrogen oxides and carbon monoxide, investment savings, energy saving, and reactant savings, i.e. operating costs. The method according to the invention, which is illustrated in the description, has been used in heating boilers and power boilers, in particular in grate boilers.

Thanks to the invention, the following benefits have been achieved:
- minimized investment costs,
- minimized operating costs,
- significantly simplified installation,
- minimized space needed to install the system,
- operational reliability,
- reduced nitrogen oxide (NOₓ)emissions,
- reduced carbon monoxide (CO) emission,
- increased device efficiency due.to reduced O₂ content in flue gas,
- increased system efficiency due to the replacement of water injection into the furnace chamber in order to distribute the reactant in the furnace chamber or to atomize the reactant, by process gas or compressed air, respectively,
- reduced content of unreacted reactant in flue gas and ash in comparison to methods known up to now,
- increased service life of the device due to reduced reactant concentration in the furnace chamber and to balanced temperature profile in the furnace chamber,
- increased thermal efficiency of the furnace chamber due to increased average heat flux transmitted to the walls of the furnace chamber.

## Claims

1. A method for the reduction of nitrogen oxides and carbon monoxide in furnace chambers of water boilers and steam boilers, especially grate boilers, using injection of process gas and reactant into the furnace chamber (4,10) through a system of injection lances (6,7), wherein process gas, the process gas being air, flue gas or a flue gas-air mixture in a proportion from 0 to 100%, and reactant are injected through process gas lances (6) and reactant lances (7) into the furnace chamber in a direction opposite to the main, natural direction of the flue gas flow through the furnace chamber, preferably top to bottom, with a stream deviation of +/-15° in a plane parallel to the longitudinal symmetry plane of the furnace chamber (4,10), that is, in the direction of temperature increase in the furnace chamber,
wherein process gas lances (6) and reactant lances (7) are placed on at least one wall of the furnace chamber (4,10) at 0.5 of the depth of the furnace chamber (4,10) from the axis of the front panel wall tubes, wherein for example process gas is injected from an upper, side or front wall of the furnace chamber, wherein process gas is injected through process gas lances (6) from a back wall of the furnace chamber for additional vortex intensification, and is supplied in a horizontal direction, while maintaining a stream deviation of +/-45°, in the plane parallel to the longitudinal symmetry plane of the furnace chamber, the process gas being supplied to the combustion chamber at a speed of 30 to 180 m/s, preferably 135 m/s, in an amount of up to 20% of the air stream necessary to completely burn the fuel while maintaining a minimum **Received at EPO via Web-Form on Oct 17, 2021**
proportion of oxygen in the flue gas, wherein the injection points of the process gas lances (6) from the back wall of the furnace chamber (4,10) are located at a distance of up to 0.2 of the depth of the furnace chamber from the axis of the back panel wall tubes of the furnace chamber, wherein moreover, the reactant is supplied into the
combustion chamber at a speed of 30 to 180 m/s, preferably 135 m/s, wherein process gas and reactant are injected so as to cause an internal recirculation of flue gas in the interior of the furnace chamber (4,10), said internal recirculation being created by a reverse vortex in the plane parallel to the longitudinal symmetry plane of the furnace chamber, the injected process gas and reactant sucking in flue gas from a flue gas stream flowing along the back wall from an area just before a flue gas exit of the furnace chamber (4,10) at an upper end of the back wall, and the mixture of reactant, process gas and flue gas moving along the front wall of the furnace chamber in a direction of temperature increase towards a combustion area (CZ) of the furnace chamber (4,10).

2. A method according to claim 1, wherein the injection points of the
process gas or process gas with the reactant for example injection from the front or side wall of the furnace chamber, are located at one, two or three levels, the highest row of injection lances being located at a distance of 0.5 to 1 height of the furnace chamber above the grate, preferably at the height of the lower edge of the bull nose.

3. A method according to claim 1, wherein the injection points of the
process gas, for example injection from the back wall of the furnace chamber, are located at the level of the lower edge of the bull nose.

4. A method according to claim 1, wherein in addition to the process gas
supplied to the furnace chamber through front and back lances and reactant supplied to the furnace chamber through front lances, a part of reactant and process gas, up to 20%, preferably 10% of the reactant and up to 20%, preferably 10% of the process gas, are injected into the furnace chamber from the side or top wall of the furnace chamber into the area of the boiler bull nose.

5. A method according to claim 1, wherein the amount of media flowing
through the lances is different for individual lances depending on the boiler load, in order to balance the temperature profiles in the furnace chamber and to shape the reduction and oxidation zone.

6. A method according to claim 1, wherein at different loadings of the
device, a part of the lances is switched off in order to balance the temperature profiles in the furnace chamber and to shape the reduction and oxidation zone.

7. Water and steam boiler, especially a grate boiler, comprising a furnace chamber (4, 10) and a system for the reduction of nitrogen oxides and carbon monoxide, wherein the furnace chamber (4, 10) has a front wall, a back wall, and a flue gas exit at an upper end of the
back wall, wherein said system includes a process gas feed with a flow regulator, a reactant feed with a flow regulator, process gas lances (6), reactant lances (7), a device for measuring the NOₓ, CO and O₂ concentration in the flue gas, and a control device, wherein the process gas feed consists of an intake (11), a fan (12), a group of devices for flow measuring (13), a regulating and shut-off damper (14) and a collector, wherein the reactant feed consists of a tank (15), a pump (16), a group of devices for flow measuring (17), a regulating and shut-off element (18), wherein the process gas feed and the reactant feed are connected to the furnace chamber (4, 10) through the process gas lances (6) and reactant lances (7) placed on at least one wall of the furnace chamber (4, 10) at 0.5 of the depth of the furnace chamber (4, 10) from the axis of the front panel wall tubes and, wherein the process gas lances (6) and reactant lances (7) are directed so that the direction of outflow of the process gas and reactant is opposite to the main, natural direction of flue gas stream in the furnace chamber with a deviation of +/-15° in a plane parallel to the longitudinal symmetry plane of the chamber furnace (4, 10), that is, in the direction of temperature increase in the furnace chamber, wherein the device measuring the concentration of NOx, CO and O₂ is built in the flue gas area in the convective part of the boiler or behind it, the signal from said device being sent to the control device, which controls the flow rate of the process gas by means of the process gas flow measuring devices (13) and the regulating and shut-off damper (14), said control device also controlling the flow rate of the reactant by means the reactant flow measuring devices (17) and the regulating and shut-off element (18), wherein the control device is configurated to control the injection of process gas and reactant so as to cause an internal recirculation of the flue gas in the interior of the furnace chamber (4, 10), said internal recirculation being created by a reverse vortex in the plane parallel to the longitudinal symmetry plane of the furnace chamber, the injected process gas with reactant sucking in flue gas from a flue gas stream flowing along the back wall from an area just before the flue gas exit, and the mixture of reactant, process gas and flue gas moving along the front wall of the furnace chamber in a direction of temperature increase toward a combustion area (CZ) of the furnace chamber (4, 10).

8. A boiler according to claim 7, wherein the process gas injection lances (6) for vortex intensification are mounted on the back panel wall of the furnace chamber (4, 10) at a distance of 0.2 of the depth of the furnace chamber (4, 10) from the axis of back panel wall tubes, and are directed so that the process gas outflow from them is directed horizontally with a deviation of +/-45°, in a plane parallel to the longitudinal symmetry plane of the furnace chamber (4, 10).

9. A boiler according to claim 7, wherein the process gas injection lances (6) and reactant lances (7) are located on the front or/and the side wall of the furnace chamber (4, 10) at one, two or three levels, the highest row of injection process gas lances (6) and reactant lances (7) being located at a distance of 0.5 to 1 height of the furnace chamber (4, 10) above the grate (3), preferably at the level of the lower edge of the bull nose, and the remaining ones below, it in a specially made deflection of this wall, at a distance of up to 0.3 of the depth of the furnace chamber (4, 10) from the axis of the front panel wall tubes.

10. A boiler according to claim 7, wherein the injection process gas lances (6) and reactant lances (7) are located on the front or/and the side wall of the furnace chamber (4, 10) at one, two or three levels, the highest row of injection process gas lances (6) and reactant lances (7) being located at a distance of 0.5 to 1 height of the furnace chamber (4, 10) above the grate (3), preferably at the level of the lower edge of panel wall tubes, and the remaining ones below it, the lances have a shape similar to the letter "L" and the inlet from them is located at a distance of up to 0.5 of the depth of the furnace chamber (4, 10) from the axis of the front panel wall tubes.

11. A boiler according to claim 7, wherein the injection process gas lances (6) and reactant lances (7) are located on the upper wall of the furnace chamber (4, 10) at a distance of up to 0.5 of the depth of the furnace chamber (4, 10) from the axis of the front panel wall tubes.

12. A boiler according to claim 7, wherein the process gas injection lances (6) are located on the back wall of the furnace chamber (4, 10) at a distance of up to 0.2 of the depth of the furnace chamber (4, 10) from the axis of the back panel wall tubes, and/or on the front wall of the furnace chamber (4, 10) at a distance of up to 0.5 of the depth of the furnace chamber (4, 10).

13. A boiler according to claim 7, wherein at least one lance (19) is used
for centrally injecting the reactant into the process gas collector.

14. A boiler according to claim 7, wherein inside the process gas injection lances (6) there are nozzles of the reactant lances (7) for injecting the reactant together with the process gas into the furnace chamber (4, 10), the number of reactant nozzles being equal or smaller than the number of process gas lances (6).

15. A boiler according to claim 7, wherein between the process gas
injection lances (6) at the level of the process gas injection lances reactant injecting lances (7) are built in, the number of reactant lances (7) being equal to or smaller than the number of process gas lances (6).

## Patentansprüche

1. Ein Verfahren zur Reduzierung von Stickoxiden und Kohlenmonoxid in den Feuerräumen von Wasser- und Dampfkesseln, insbesondere Rostkesseln, unter Verwendung der Injektion von Prozessgas und Reagens in den Feuerraum (4, 10) durch ein System von Injektionslanzen (6, 7), **dadurch gekennzeichnet, , dass** das Prozessgas, bei dem es sich um Luft, Rauchgas oder ein 0 - 100% iges Gemisch aus Rauchgas und Luft handelt, und Reagenz, über die Prozessgaslanzen (6) und Reagenzlanzen (7) in den Feuerraum in einer zur natürlichen Hauptströmungsrichtung des Rauchgases durch den Feuerraum entgegengesetzten Richtung, vorzugsweise von oben nach unten, eingespritzt werden, mit einer Ablenkung des Strahls von +/-15° in einer zur Längssymmetrieebene des Feuerraums (4, 10) parallelen Ebene, d.h. in Richtung des Temperaturanstiegs im Feuerraum eingespritzt werden, wobei die Prozessgaslanzen (6) und die Reagenzlanzen (7) an mindestens einer Wand des Feuerraums (4, 10) in einem Abstand von der Achse der vorderen Kühlschirmrohre angeordnet sind, der gleich 0,5 der Tiefe des Feuerraums (4, 10) ist, wobei z.B. das Prozessgas von der oberen, seitlichen oder vorderen Feuerraumwand eingespritzt wird, wobei das Prozessgas zur zusätzlichen Wirbelverstärkung von der Feuerraum-Rückwand aus durch die Prozessgaslanzen (6) eingespritzt und in horizontaler Richtung mit +/-45°-Flussablenkung in einer zur Längssymmetrieebene des Feuerraums parallelen Ebene zugeführt wird, wobei das Prozessgas mit einer Geschwindigkeit von 30 bis 180 m/s, vorzugsweise 135 m/s, in den Feuerraum in einer Menge von bis zu 20% des für die vollständige Verbrennung des Brennstoffs erforderlichen Luftstroms unter Aufrechterhaltung eines Mindestsauerstoffgehalts im Rauchgas eingespeist wird, wobei die Einspritzpunkte der Prozessgaslanzen (6) von der Rückwand des Feuerraums (4, 10) in einem Abstand von bis zu 0,2 der Tiefe des Feuerraums von der Achse der Kühlschirmrohre der Rückwand des Feuerraums angeordnet sind, wobei ferner das Reagens in die Verbrennungskammer mit einer Geschwindigkeit von 30 bis 180 m/s, vorzugsweise 135 m/s, zugeführt wird, wobei das Prozessgas und das Reagens so eingespritzt werden, dass eine interne Rezirkulation der Verbrennungsgase innerhalb des Feuerraums (4, 10) bewirkt wird, wobei die erwähnte interne Rezirkulation durch einen Rückwirbel in einer zur Längssymmetrieebene des Feuerraums parallelen Ebene erzeugt wird, wobei die eingespritzten Prozessgas und Reagenz das Rauchgas aus dem Rauchgasstrom ansaugen, der entlang der Rückwand aus dem Bereich unmittelbar vor dem Rauchgasauslass aus dem Feuerraum (4, 10) am oberen Ende der Rückwand strömt, und sich das Gemisch aus Reagenz, Prozessgas und Rauchgas entlang der Vorderwand des Feuerraums in Richtung des Temperaturanstiegs zum Verbrennungsbereich (CZ) des Feuerraums (4, 10) verlagert.

2. Das Verfahren nach Anspruch 1 **dadurch gekennzeichnet, dass** bei einer Einspritzung von der Vorder- oder Seitenwand des Feuerraums aus die Einspritzpunkte des Prozessgases oder des Prozessgases mit dem Reagenz auf einer, zwei oder drei Ebenen liegen, wobei sich die oberste Reihe von Einspritzlanzen in einem Abstand von 0,5 bis 1 Höhe des Feuerraums über dem Rost, vorzugsweise auf der Höhe der Unterkante der Feuerbrücke befindet.

3. Das Verfahren nach Anspruch 1 **dadurch gekennzeichnet, dass** bei der Einspritzung von der Rückwand des Feuerraums aus die Einspritzpunkte für das Prozessgas auf der Höhe der Unterkante der Feuerbrücke angeordnet sind.

4. Das Verfahren nach Anspruch 1 **dadurch gekennzeichnet, dass** zusätzlich zu dem durch die vorderen und hinteren Lanzen dem Feuerraum zugeführten Prozessgas und dem durch die vorderen Lanzen dem Feuerraum zugeführten Reagenz, ein Teil des Reagenzes und des Prozessgases, d.h. bis zu 20%, vorzugsweise 10% des Reagenzes und bis zu 20%, vorzugsweise 10% des Prozessgases in den Feuerraum von der Seiten- oder Deckenwand des Feuerraums in den Feuerbrückenbereich eingespritzt werden.

5. Das Verfahren nach Anspruch 1 **dadurch gekennzeichnet, dass** die durch die Lanzen strömende Medienmenge für einzelne Lanzen je nach Belastung des Kessels unterschiedlich ist, um die Temperaturprofile im Feuerraum auszugleichen und eine Reduktions- und Oxidationszone zu gestalten.

6. Das Verfahren nach Anspruch 1 **dadurch gekennzeichnet, dass** bei unterschiedlichen Belastungen der Anlage ein Teil der Lanzen abgeschaltet wird, um die Temperaturprofile im Feuerraum auszugleichen und die Reduktions- und Oxidationszone zu gestalten.

7. Ein Wasserkessel oder Dampfkessel, insbesondere Rostkessel, enthaltend einen Feuerraum (4, 10) und ein System zur Reduktion von Stickoxiden und Kohlenmonoxid, wobei der Feuerraum (4, 10) eine Vorderwand, eine Rückwand und einen Rauchgasauslass an der Oberseite der Rückwand aufweist, wobei das erwähnte System eine Prozessgasversorgung mit Durchflussregler, eine Reagenzversorgung mit Durchflussregler, Prozessgaslanzen (6), Reagenzlanzen (7), eine Vorrichtung zum Messen der Konzentration von NO_{X}, CO und O₂ im Abgas und ein Steuergerät umfasst, **dadurch gekennzeichnet, dass** die Prozessgasversorgung einen Einlass (11), einen Ventilator (12), eine Gruppe von Durchflussmessgeräten (13), eine Regel- und Absperrklappe (14) und einen Kollektor umfasst, wobei die Reagenzversorgung einen Tank (15), eine Pumpe (16), eine Gruppe von Durchflussmessgeräten (17) und ein Regel- und Absperrorgan (18) umfasst, wobei die Prozessgasversorgung und die Reagenzversorgung über die an mindestens einer Wand des Feuerraums (4, 10) in einem Abstand von 0,5 der Feuerraumtiefe von der Achse der Rohre des vorderen Kühlschirms aus gerechnet angeordneten Prozessgaslanzen (6) und Reagenzlanzen (7) mit dem Feuerraum (4, 10) verbunden sind, wobei die Prozessgaslanzen (6) und die Reagenzlanzen (7) so ausgerichtet sind, dass die Auslassrichtung des Prozessgases und des Reagens entgegengesetzt zur natürlichen Hauptrichtung des Rauchgasstroms im Feuerraum ist, mit einer Abweichung von +/-15° in einer zur Längssymmetrieebene des Feuerraums (4, 10) parallelen Ebene, d. h. in Richtung des Temperaturanstiegs im Feuerraum, wobei das Gerät zur Messung der NOx-, CO- und O₂-Konzentration im Rauchgasbereich im Konvektionsteil des Kessels oder hinter dem letzteren eingebaut ist, von dem erwähnten Gerät ein Signal an eine Steuervorrichtung gesendet wird, die die Prozessgasdurchflussrate mit Hilfe von Prozessgasflussmessvorrichtungen (13) und der Regel- und Absperrklappe (14) steuert, wobei diese Steuervorrichtung auch die Reagenzdurchflussrate mit Hilfe von Reagenzflussmessvorrichtungen (17) und dem Regel- und Absperrelement (18) steuert, wobei die Steuervorrichtung so konfiguriert ist, dass sie die Einspritzung von Prozessgas und Reagenz steuert, um eine interne Rezirkulation der Abgase im Inneren des Feuerraums (4, 10) zu bewirken, wobei diese interne Rezirkulation durch einen Rückwärtswirbel in einer zur Längssymmetrieebene des Feuerraums parallelen Ebene erzeugt wird, die eingespritzten Prozessgas und Reagenz saugen das Rauchgas aus dem Rauchgasstrom an, der an der Rückwand entlang aus dem Bereich unmittelbar vor dem Rauchgasauslass strömt, und das Gemisch aus Reagenz, Prozessgas und Rauchgas bewegt sich entlang der Vorderwand des Feuerraums in Richtung des Temperaturanstiegs zum Verbrennungsbereich (CZ) des Feuerraums (4, 10).

8. Der Kessel nach Anspruch 7 **dadurch gekennzeichnet, dass** die Prozessgas-Einspritzlanzen (6) zur Verstärkung des Wirbels am hinteren Kühlschirm des Feuerraums (4, 10) in einem Abstand von 0,2 der Tiefe des Feuerraums (4, 10) von der Achse der Rohre des hinteren Kühlschirms angebracht und so gerichtet sind, dass der Prozessgasaustritt aus ihnen horizontal, mit einer Abweichung von +/- 45° in einer zur Längssymmetrieebene des Feuerraums (4, 10).parallelen Ebene gerichtet ist.

9. Der Kessel nach Anspruch 7 **dadurch gekennzeichnet, dass** die Prozessgaseinspritzlanzen (6) und Reagenzlanzen (7) an der Vorder- oder/und Seitenwand des Feuerraums (4, 10) in einer, zwei oder drei Ebenen angeordnet sind, wobei die oberste Reihe der Prozessgas-Einspritzlanzen (6) und Reagenzeispritzlanzen (7) in einem Abstand von 0,5 bis 1 der Höhe des Feuerraums ((4, 10) über dem Rost (3) angeordnet ist, vorzugsweise auf der Höhe der Unterkante der Feuerbrücke, und die anderen darunter, in einer speziell angefertigten Biegung dieser Wand, in einem Abstand von bis zu 0,3 der Tiefe des Feuerraums (4, 10) von der Achse der Rohre des vorderen Kühlschirms.

10. Der Kessel nach Anspruch 7 **dadurch gekennzeichnet, dass** die Prozessgas-Eispritzlanzen (6) und Reagenzeinspritzlanzen (7) an der Vorder- und/oder Seitenwand des Feuerraums (4, 10) auf einer, zwei oder drei Ebenen angeordnet sind, wobei sich die oberste Reihe von Prozessgas-Eispritzlanzen (6) und Reagenzeinspritzlanzen (7) in einem Abstand von 0,5 bis 1 der Höhe des Feuerraums (4, 10) über dem Rost (3), vorzugsweise auf der Höhe der Unterkante der Kühlschirmrohre befindet und die anderen darunter, wobei die Lanzen eine dem Buchstaben "L" ähnliche Form haben und der Einlass von ihnen in einem Abstand von der Achse der Rohre des vorderen Kühlschirms angeordnet ist, der bis zu 0,5 der Tiefe des Feuerraums (4, 10) gleich ist.

11. Der Kessel nach Anspruch 7 **dadurch gekennzeichnet, dass** die Prozessgas-Einspritzlanzen (6) und die Reagenzeinspritzlanzen (7) an der Deckenwand des Feuerraums (4, 10) in einem Abstand von bis zu 0,5 der Tiefe des Feuerraums (4, 10) von der Achse der Rohre des vorderen Kühlschirms angeordnet sind.

12. Der Kessel nach Anspruch 7 **dadurch gekennzeichnet, dass** die Prozessgas-Einspritzlanzen (6) an der hinteren Wand des Feuerraums (4, 10) in einem Abstand von bis zu 0,2 der Tiefe des Feuerraums (4, 10) von der Achse der Rohre des hinteren Kühlschirms und/oder an der Vorderwand des Feuerraums (4, 10) in einem Abstand von bis zu 0,5 der Tiefe des Feuerraums (4, 10) angeordnet sind.

13. Der Kessel nach Anspruch 7 **dadurch gekennzeichnet, dass** mindestens eine Lanze (19) dazu dient, das Reagenz zentral in den Prozessgassammler einzuspritzen.

14. Der Kessel nach Anspruch 7 **dadurch gekennzeichnet, dass** im Inneren der Prozessgas-Einspritzlanzen (6) Düsen (7) zum Einspritzen des Reagenzes zusammen mit dem Prozessgas in den Feuerraum (4, 10) angeordnet sind, wobei die Anzahl der Reagenz-Düsen (7) gleich oder kleiner ist als die Anzahl der Prozessgaslanzen (6).

15. Der Kessel nach Anspruch 7 **dadurch gekennzeichnet, dass** zwischen den Prozessgas-Einspritzlanzen (6) in der Höhe der Prozessgas-Einspritzlanzen Reagenzeinspritzlanzen (7) eingebaut sind, wobei die Anzahl der Reagenzlanzen (7) gleich oder kleiner als die Anzahl der Prozessgaslanzen (6) ist.

## Revendications

1. Un procédé de réduction des oxydes d'azote et du monoxyde de carbone dans des chambres de combustion de chaudières à eau et de chaudières à vapeur, en particulier de chaudières à grille, utilisant l'injection d'un gaz de procédé et d'un réactif dans la chambre de combustion (4, 10) par un système de lances d'injection (6, 7), **caractérisé en ce que** le gaz de procédé, qui est de l'air, du gaz de fumée ou un mélange de gaz de fumée et d'air dans une proportion de 0 à 100%, et le réactif sont injectés par les lances de gaz de procédé (6) et les lances de réactif (7) dans la chambre de combustion dans une direction opposée à la direction principale, naturelle de l'écoulement des gaz de combustion à travers la chambre de combustion, de préférence de haut en bas avec une déviation du jet de +/-15° dans un plan parallèle au plan de symétrie longitudinal de la chambre de combustion (4, 10), c'est-à-dire dans la direction de l'augmentation de la température dans la chambre de combustion, les lances de gaz de procédé et de réactif étant positionnées sur au moins une paroi de la chambre de combustion (4, 10) à une distance de l'axe des tubes d'écran avant égale à 0,5 de la profondeur de la chambre de combustion (4, 10), le gaz de procédé étant, par exemple, injecté depuis la paroi supérieure, latérale ou avant de la chambre de combustion, le gaz de procédé étant aussi injecté via les lances de gaz de procédé (6) depuis la paroi arrière de la chambre de combustion pour un renforcement supplémentaire du tourbillon et étant alimenté dans une direction horizontale avec une déviation de +/-45° du flux dans un plan parallèle au plan de symétrie longitudinal de la chambre de combustion, le gaz de procédé étant introduit dans la chambre de combustion à une vitesse de 30 à 180 m/s, de préférence 135 m/s, en une quantité allant jusqu'à 20% du débit d'air requis pour la combustion complète du combustible tout en maintenant une teneur minimale en oxygène dans les gaz de combustion, les points d'injection des lances de gaz de procédé (6) à partir de la paroi arrière de la chambre de combustion étant situés à une distance allant jusqu'à 0,2 de la profondeur de la chambre de combustion à partir de l'axe des tuyaux de l'écran de la paroi arrière de la chambre de combustion, le réactif étant, en plus, introduit dans la chambre de combustion à une vitesse de 30 à 180 m/s, de préférence de 135 m/s, le gaz de procédé et le réactif étant injectés de manière à provoquer une recirculation interne des gaz de combustion à l'intérieur de la chambre de combustion (4, 10), ladite recirculation interne étant créée par un tourbillon inverse dans un plan parallèle au plan de symétrie longitudinal de la chambre de combustion, le gaz de procédé et le réactif injectés aspirant les gaz de combustion du flux de gaz de combustion s'écoulant le long de la paroi arrière depuis la zone située juste avant la sortie des gaz de combustion de la chambre de combustion(4, 10) à l'extrémité supérieure de la paroi arrière, et le mélange de réactif, de gaz de procédé et de gaz de combustion se déplacant le long de la paroi avant de la chambre de combustion dans la direction de l'augmentation de la température vers la zone de combustion (CZ) de la chambre de combustion (4, 10).

2. Le procédé selon la revendication 1, **caractérisé en ce que**, dans le cas d'une injection depuis la paroi frontale ou latérale de la chambre de combustion, les points d'injection du gaz de procédé ou du gaz de procédé avec réactif sont situés sur un, deux ou trois niveaux, la rangée supérieure de lances d'injection se situant entre 0,5 et 1 de la hauteur de la chambre de combustion au-dessus de la grille, de préférence à la hauteur du bord inférieur de l'autel.

3. Le procédé selon la revendication 1, **caractérisé en ce que,** dans le cas d'une injection à partir de la paroi arrière de la chambre de combustion, les points d'injection du gaz de procédé sont situés à la hauteur du bord inférieur de l'autel.

4. Le procédé selon la revendication 1, **caractérisé en ce qu'**en plus du gaz de procédé fourni à la chambre de combustion par les lances avant et arrière et du réactif fourni à la chambre de combustion par les lances avant, une partie du réactif et du gaz de procédé, jusqu'à 20%, de préférence 10% du réactif et jusqu'à 20%, de préférence 10% du gaz de procédé, est injectée dans la chambre de combustion depuis la paroi latérale ou supérieure de la chambre de combustion dans la zone de l'autel de la chaudière.

5. Le procédé selon la revendication 1, **caractérisé en ce que** la quantité de média passant par les lances varie d'une lance à l'autre en fonction de la charge de la chaudière, afin d'égaliser les profils de température dans la chambre de combustion et de former les zones de réduction et d'oxydation.

6. Le procédé selon la revendication 1, **caractérisé en ce qu'**à diverses charges de l'appareil, une partie de lances est désactivée, afin d'égaliser les profils de température dans la chambre de combustion et de former les zones de réduction et d'oxydation.

7. Une chaudière à eau ou une chaudière à vapeur, en particulier une chaudière à grille, comprenant une chambre de combustion (4, 10) et un système pour réduire les oxydes d'azote et le monoxyde de carbone, dans laquelle la chambre de combustion (4, 10) a une paroi avant, une paroi arrière et une sortie de gaz de combustion dans la partie supérieure de la paroi arrière, dans laquelle ledit système comprend un dispositif d'alimentation en gaz de procédé avec un contrôleur de débit, un dispositif d'alimentation en réactif avec un contrôleur de débit, des lances du gaz de procédé (6), des lances du réactif (7), un dispositif pour mesurer les concentrations de NO_{X}, CO et O₂ dans les gaz de combustion et un dispositif de contrôle, **caractérisée en ce que** ledit dispositif d'alimentation en gaz de procédé comprend une prise de gaz (11), un ventilateur (12), un groupe de dispositifs pour mesurer le débit (13), un registre de régulation et de fermeture (14) et un collecteur, dans laquelle le dispositif d'alimentation en réactif comprend un réservoir (15), une pompe (16), un groupe de dispositifs pour mesurer le débit (17), un élément de de régulation et de fermeture (18), dans laquelle le dispositif d'alimentation en gaz de procédé et le dispositif d'alimentation en réactif sont reliées à la chambre de combustion (4, 10) au moyen des lances de gaz de procédé (6) et des lances de réactif (7) situées sur au moins une paroi de la chambre de combustion (4, 10) à 0,5 de la profondeur de la chambre de combustion (4, 10) en comptant à partir de l'axe des tuyaux de l'écran frontal et où les lances de gaz de procédé (6) et de réactif (7) sont dirigées de manière à ce que la direction de l'écoulement du gaz de procédé et du réactif soit opposée à la direction principale et naturelle de l'écoulement des gaz de combustion dans la chambre de combustion avec une déviation de +/-15° dans un plan parallèle au plan de symétrie longitudinal de la chambre de combustion (4, 10), c'est-à-dire dans la direction de l'augmentation de la température dans la chambre de combustion, dans laquelle le dispositif mesurant la concentration de NO_{X}, CO et O₂ est intégré dans la zone des gaz de combustion dans la partie de convection de la chaudière ou en aval d'elle, à partir de ledit dispositif le signal est envoyé à un dispositif de commande qui commande le débit de gaz de procédé par l'intermédiaire des dispositifs de mesure du débit de gaz de procédé (13) et du registre de régulation et de fermeture (14) et lequel dispositif de commande commande également le débit de réactif par l'intermédiaire des dispositifs de mesure du débit de réactif (17) et de l' élément de régulation et de fermeture (18), dans laquelle le dispositif de commande est configuré pour commander l'injection du gaz de procédé et du réactif de manière à provoquer une recirculation interne des gaz de combustion à l'intérieur de la chambre de combustion (4, 10), ladite recirculation interne étant produite par un vortex inverse dans un plan parallèle au plan de symétrie longitudinal de la chambre de combustion, le gaz de procédé et le réactif injectés aspirent les gaz de combustion du flux de gaz de combustion s'écoulant le long de la paroi arrière à partir de la zone située immédiatement devant la sortie des gaz de combustion, et le mélange de réactif, de gaz de procédé et de gaz de combustion se déplace le long de la paroi avant de la chambre de combustion dans la direction de l'augmentation de la température vers la zone de combustion (CZ) de la chambre de combustion (4, 10).

8. La chaudière selon la revendication 7 **caractérisée en ce que** les lances d'injection de gaz de procédé (6), pour l'amplification du tourbillon, sont montées sur l'écran arrière de la chambre de combustion (4, 10) à une distance de 0,2 de la profondeur de la chambre de combustion (4, 10) par rapport à l'axe des tuyaux de l'écran arrière et sont orientées de telle sorte que le flux de gaz de procédé qui en sort est dirigé horizontalement avec une déviation de +/-45°, dans un plan parallèle au plan longitudinal de la symétrie de la chambre de combustion (4, 10).

9. La chaudière selon la revendication 7 **caractérisée en ce que** les lances d'injection de gaz de procédé (6) et les lances de réactif (7) sont positionnées sur la paroi frontale et/ou latérale de la chambre de combustion (4, 10) à un, deux ou trois niveaux, la rangée supérieure des lances d'injection de gaz de procédé (6) et des lances de réactif (7) étant positionnée entre 0,5 et 1 de la hauteur de la chambre de combustion (4, 10) au-dessus de la grille (3), de préférence au niveau du bord inférieur de l'autel, et les autres en dessous, dans une courbure spécialement réalisée de cette paroi, à une distance de l'axe des tuyaux de l'écran frontal égale jusqu'à 0,3 de la profondeur de la chambre de combustion (4, 10).

10. La chaudière selon la revendication 7 **caractérisée en ce que** les lances d'injection de gaz de procédé (6) et les lances de réactif (7) sont positionnées sur la paroi frontale et/ou latérale de la chambre de combustion (4, 10) à un, deux ou trois niveaux, la rangée supérieure des lances d'injection de gaz de procédé (6) et des lances de réactif (7) étant positionnée entre 0,5 et 1 de la hauteur de la chambre de combustion (4, 10) au-dessus de la grille (3), de préférence au niveau du bord inférieur des tuyaux de l'écran et les autres en dessous, les lances ayant une forme approximative de la lettre "L" et la sortie de celles-ci se trouvant à une distance de l'axe des tuyaux de l'écran avant égale jusqu'à 0,5 de la profondeur de la chambre de combustion (4, 10).

11. La chaudière selon la revendication 7 **caractérisée en ce que** les lances d'injection de gaz de procédé (6) et les lances de réactif (7) sont positionnées sur la paroi supérieure de la chambre de combustion (4, 10) à une distance de l'axe des tuyaux de l'écran avant égale jusqu'à 0,5 de la profondeur de la chambre de combustion (4, 10).

12. La chaudière selon la revendication 7 **caractérisée en ce que** les lances d'injection de gaz de procédé (6) sont positionnées sur la paroi arrière de la chambre de combustion (4, 10) à une distance de l'axe des tuyaux de l'écran arrière égale jusqu'à 0,2 de la profondeur de la chambre de combustion (4, 10) et/ou sur la paroi avant de la chambre de combustion (4, 10) à une distance égale jusqu'à 0,5 de la profondeur de la chambre de combustion (4, 10).

13. La chaudière selon la revendication 7 **caractérisée en ce qu'**au moins une lance (19) sert à injecter de manière centrale le réactif dans le collecteur de gaz de procédé.

14. La chaudière selon la revendication 7 **caractérisée en ce qu'**il y a des buses (7) à l'intérieur des lances d'injection de gaz de procédé (6) pour injecter le réactif avec le gaz de procédé dans la chambre de combustion (4, 10), le nombre de buses de réactif (7) étant égal ou inférieur au nombre de lances de gaz de procédé (6).

15. La chaudière selon la revendication 7 **caractérisée en ce que** les lances d'injection de réactif (7) sont incorporées entre les lances d'injection de gaz de procédé (6) au niveau des lances d'injection de gaz de procédé, le nombre de lances de réactif (7) étant égal ou inférieur au nombre de lances de gaz de procédé (6).
